# EUROPÄISCHE PATENTSCHRIFT

(11) **EP 0 636 283 B1**
(45) Veröffentlichungstag und Bekanntmachung des Hinweises auf die Patenterteilung: **04.10.1995**
(21) Anmeldenummer: 93908932.2
(22) Anmeldetag: 10.04.1993
(51) Int. Cl.: H02B 1/14, H02G 15/013

(54) **STOPFEN ZUM ELEKTRISCH DICHTEN VERSCHLIESSEN EINER STECKBUCHSE**
STOPPER PROVIDING ELECTRICALLY INSULATING CLOSURE OF A SOCKET
BOUCHON POUR FERMER UNE PRISE FEMELLE DE MANIERE GARANTISSANT L'ISOLATION ELECTRIQUE

(30) Priorität: 16.04.1992 DE 4212756
(43) Veröffentlichungstag der Anmeldung: 01.02.1995
(73) Patentinhaber: KARL PFISTERER ELEKTROTECHNISCHE SPEZIALARTIKEL GMBH & CO. KG, 70324 Stuttgart (DE)
(72) Erfinder: BÄUERLE, Gottfried, D-7012 Fellbach-Schmieden (DE); SANDER, Dieter, D-7000 Stuttgart 75 (DE); BACHMATER, Albert, D-7067 Plüderhausen (DE); GOTTSCHALK, Klaus, D-7014 Kornwestheim (DE)
(74) Vertreter: Patentanwälte Bartels und Partner
(86) Internationale Anmeldenummer: EP9300877
(87) Internationale Veröffentlichungsnummer: WO9321675

(56) Entgegenhaltungen:
- DD-C- 114 185
- DE-A- 2 939 931
- DE-A- 3 110 660
- DE-C- 3 121 001

## Beschreibung

Die Erfindung betrifft einen Stopfen zum elektrisch dichten Verschließen einer Steckbuchse eines Mittel- und Hochspannungsenergieversorungssystems für einen Kabelstecker, mit einem elastisch deformierbaren Stopfenkörper aus einem elektrisch isolierenden Material, der zwischen dem sich gegen sein eines Ende hin konisch verjüngenden einen Endabschnitt und dem mit einem metallischen Deckel verbundenen anderen Endabschnitt einen Mittelabschnitt aufweist, dessen Außendurchmesser kleiner ist als der größte Außendurchmesser des konischen Endabschnittes und der mit einem zentralen, sacklochartig ausgebildeten Hohlraum versehen ist, welcher sich von dem gegen den Deckel weisenden Ende bis in den konischen Endabschnitt hinein erstreckt.

Da auf die bekannten Stopfen dieser Art (DE 31 21 001 C2) eine relativ große Kraft ausgeübt werden muß, um die volle Dichtwirkung zu erreichen, und große Kräfte die Handhabung des Stopfens erschweren, liegt der Erfindung die Aufgabe zugrunde, einen Stopfen zu schaffen, bei dem verringerte Betätigungskräfte ausreichend sind. Diese Aufgabe löst ein Stopfen mit den Merkmalen des Anspruches 1.

Mittels der durch den Formkörper am konisch verjüngten Ende des Stopfenkörpers vorgesehenen Feldsteuerelektrode läßt sich in einfacher Weise die Konfiguration des elektrischen Feldes, das immer dann vorhanden ist, wenn die Steckbuchse unter Spannung steht, so beeinflussen, daß die Anforderungen an die elektrische Dichtwirkung des Stopfens reduziert wird. Dies ist vor allem bei relativ großen Stopfen wichtig, um die Kraft reduzieren zu können, mit der der konische Endabschnitt des Stopfenkörpers an die konische Wandfläche der Steckbuchse angepreßt werden muß.

In vielen Fällen wird eine kostengünstige Ausbildung des Formkörpers gemäß den Ansprüchen 2 und 3 ausreichend sein.

Eine Optimierung der Feldfiguration läßt sich mit einem Formkörper erreichen, der eine Ausbildung gemäß den Ansprüchen 4 und 5 hat. Dabei kann der die Feldsteuerelektrode bildende Teil zusammen mit dem Stopfenkörper hergestellt werden. Es ist ferner hierbei vorteilhaft, die Randzone durch einen flanschartig über einen zylindrischen zentralen Teil überstehende Materialpartie zu bilden. Der durch eine Metallplatte gebildete Teil des Formkörpers ist, wenn der andere Teil aus einem elastisch deformierbaren Material besteht, vorzugsweise gemäß Anspruch 8 mit dem letztgenannten Teil verbunden.

Höchste Anforderungen lassen sich erfüllen, wenn an dem sich im konischen Endabschnitt befindenden Ende des Hohlraumes ein Druckkörper gemäß Anspruch 9 anliegt, den eine vorgespannte Druckfeder in axialer Richtung belastet, die andererseits am Deckel abgestützt ist, wobei der Druckkörper galvanisch mit dem bei eingesetztem Stopfen auf Erdpotential liegenden Deckel verbunden ist. Bei einer derartigen Ausführungsform muß die auf den konischen Endabschnitt auszuübende axiale Druckbelastung nicht oder nicht ausschließlich über den Mittelabschnitt des Stopfenkörpers übertragen werden. Vielmehr kann die auf den konischen Endabschnitt auszuübende axiale Belastung über den Druckkörper in den konischen Endabschnitt des Stopfenkörpers eingeleitet werden, wodurch eine optimale Anpressung des konischen Endabschnittes an die konische Wandung der Steckbuchse erreicht werden kann, was auch eine optimale elektrische Abdichtung ergibt. Außerdem kann der Druckkörper als zweite Feldsteuerelektrode dienen, wodurch auch eine optimale Feldkonfiguration realisiert werden kann. Das Feld kann nämlich mit Hilfe der beiden Feldsteuerelektroden weitgehend von Verzerrungen freigehalten werden. Außerdem kann ein Feldverlauf gerade in demjenigen Bereich bewirkt werden, in dem eine vorzügliche elektrische Abdichtung vorhanden ist. Schließlich weist eine Ausführungsform gemäß Anspruch 9 noch den Vorteil auf, daß sich der Stopfen selbst dann noch problemlos aus der Steckbuchse herausziehen laßt, wenn die Mantelfläche des konischen Endabschnittes vor dem Einbringen mit einer Dichtungspaste bestrichen worden ist und diese wie ein Klebstoff wirkt. Die Vorspannung der Schraubendruckfeder hat nämlich, wenn der Deckel gelöst wird, zur Folge, daß der Stopfenkörper in axialer Richtung gestreckt wird. Diese Streckung ist mit einer Kontraktion auch des konischen Endabschnittes verbunden, wodurch dessen Außenmantelfläche von der Innenwand der Steckbuchse abgehoben wird. Der Stopfen kann dann mit der Hand, also ohne zu Hilfenahme einer Abziehvorrichtung, aus der Steckbuchse herausgezogen werden.

Im folgenden ist die Erfindung anhand von zwei in der Zeichnung dargestellten Ausführungsbeispielen im einzelnen erläutert. Es zeigen
- Fig. 1: einen Längsschnitt eines ersten Ausführungsbeispiels im eingesetzten Zustand,
- Fig. 2: einen Längsschnitt eines zweiten Ausführungsbeispiels im eingesetzten Zustand.

Ein Stopfen zum elektrisch dichten Verschließen einer Steckbuchse 30 nach DIN 47 637, und zwar einer Steckbuchse für die bekannten Kabelstecker für das Innenkonussystem, weist einen aus Silikonkautschuk bestehenden Stopfenkörper 1 auf, der an seinem einen Ende mit einem metallischen Deckel 2 verbunden ist, welcher dieses Ende übergreift und einen radial nach außen abstehenden Verbindungsflansch 2′ hat, der mit in Umfangsrichtung verteilt angeordneten Bohrungen 3 für Verbindungsschrauben versehen ist. Diese Bohrungen 3 haben die gleiche Anordnung wie bei den Kabelsteckern. Der Deckel 2 kann deshalb wie das Gehäuse eines Kabelsteckers mit der Steckbuchse 30 verbunden werden, wobei gleichzeitig eine elektrisch leitende Verbindung mit einer nicht dargestellten, metallischen, geerdeten Trägerplatte oder dergleichen hergestellt wird, an welcher der üblicherweise aus Gießharz bestehende Buchsenkörper der Steckbuchse 30 festgelegt ist.

Der Stopfenkörper 1 weist einen konischen Endabschnitt 4 auf, dessen verjüngtes Ende vom Deckel 2 wegweist. Der Konuswinkel der konischen Außenmantelfläche des konischen Endabschnittes 4 ist gleich dem Konuswinkel des Innenkonus gewählt, den der Buchsenkörper der Steckbuchse bildet. An den konischen Endabschnitt 4 schließt sich ein zylindrischer Mittelabschnitt 5 an, dessen Außendurchmesser kleiner ist als der größte Außendurchmesser des konischen Endabschnittes 4. Über eine Stufe schließt sich an den Mittelabschnitt 5 der im Außendurchmesser größere, ebenfalls zylindrische Endabschnitt 6 an, der vom Deckel 2 übergriffen wird. An der durch die Stufe gebildeten Schulter liegt ein Verbindungsring 7 an, der andererseits in eine Ringnut des Deckels 2 eingreift. Hierdurch wird ein Abheben des Deckels 2 vom Stopfenkörper 1 bei einer Zugbelastung verhindert.

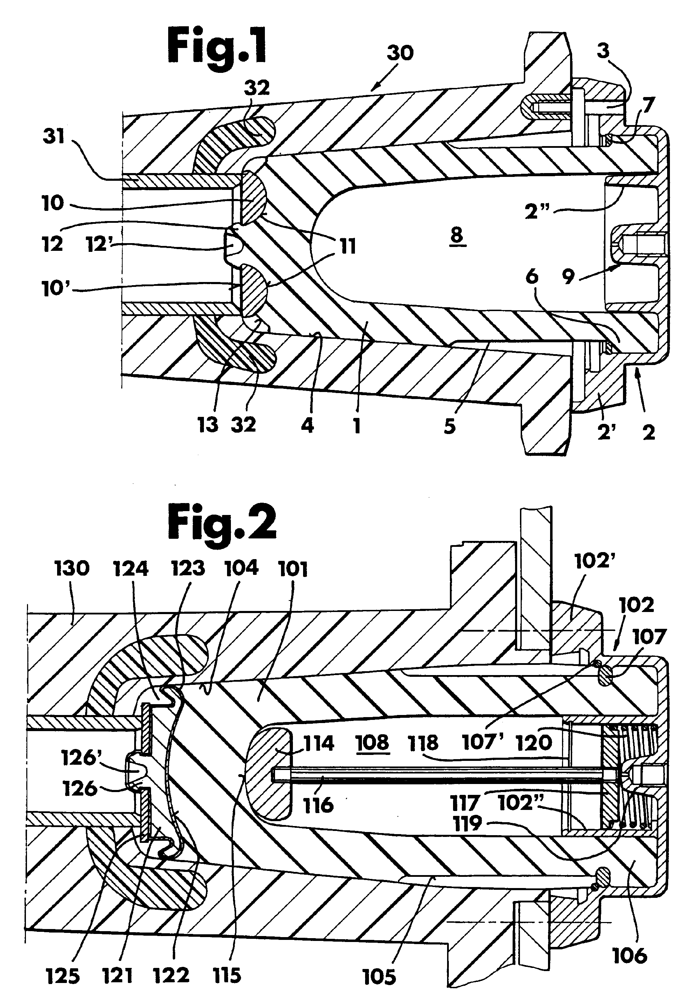

Wie Fig. 1 zeigt, ist der Stopfenkörper 1 mit einem zentralen, sacklochartigen Hohlraum 8 versehen, welcher von der am Deckel 2 anliegenden Stirnfläche des Stopfenkörpers 1 her sich bis in den konischen Endabschnitt 4 hinein erstreckt und in diesem einen Innenkonus bildet, der etwa den gleichen Konuswinkel wie der Außenkonus hat. Im Bereich des Endabschnittes 6 liegt der Stopfenkörper 1 nicht nur mit seiner Außenmantelfläche, sondern auch mit seiner Innenmantelfläche am Deckel 2 an, der zu diesem Zwecke mit einem in den Hohlraum 8 eingreifenden Hohlzylinder 2˝ versehen ist. Im Zentrum dieses Hohlzylinders 2˝ ist ein ebenfalls in den Hohlraum 8 ragender Zapfen 9 an den Deckel 2 angeformt, der mit einer Gewindebohrung zum Eindrehen eines Griffes versehen ist.

An der dem Deckel 2 abgewandten Stirnfläche des konischen Endabschnittes 4 liegt ein metallischer Ringkörper 10 an, dessen vom Stopfenkörper 2 wegweisende Stirnfläche 10′ in einer Querschnittsebene des Stopfens liegt und in Anlage an die Stirnfläche der Kontakthülse 31 der Steckbuchse 30 kommt, noch ehe der Stopfen vollständig in die Steckbuchse eingesetzt ist. Die dem Stopfenkörper 1 zugekehrte, ringwulstförmige Oberfläche des Ringkörpers 10 bildet, da sie elektrisch leitend ist, eine Feldsteuerelektrode 11. Ein Feldsteuerelement 32 ist konzentrisch zum Buchsenkörper der Steckbuchse 30 in diesen eingebettet. Es erstreckt sich von der Kontakthülse 31 aus bis in die den Innenkonus bildende Wand des Buchsenkörpers hinein.

Das zentrale Loch des Ringkörpers 10 wird von einem Fortsatz 12 des Stopfenkörpers 1 durchdrungen, welcher den Rand des Loches hintergreift und dadurch die Feldsteuerelektrode 11 in Anlage an der korrespondierend ausgebildeten Stirnseite des konischen Endabschnittes 4 hält. Der Fortsatz 12 ist mit einem von seiner freien Seite her eindringenden, zentralen Hohlraum 12′ versehen, durch welchen er in radialer Richtung nachgiebiger wird, was das Hindurchschieben durch das zentrale Loch des Ringkörpers 10 erleichtert.

Da zwischen dem Ringkörper 10 und dem Stopfenkörper 1 eine Kraftübertragung in axialer Richtung erfolgt, ist im Ausführungsbeispiel die an der Feldsteuerelektrode 11 anliegende Fläche des konischen Endabschnittes 4 von einer konischen Ringzone 13 berandet, welche zu der Außenmantelfläche des konischen Endabschnittes 4 überleitet, dessen Durchmesser am verjüngten Ende größer ist als der Außendurchmesser des Ringkörpers 10.

Die Feldsteuerelektrode 11 führt zu einer günstigen Konfiguration des elektrischen Feldes, welche das elektrisch dichte Verschließen der Steckbuchse mittels des konischen Endabschnittes 4 des Stopfen wesentlich erleichtert.

Das in Fig. 2 dargestellte Ausführungsbeispiel eines erfindungsgemäßen Stopfens ist für eine größere Steckbuchse vorgesehen, die aber ebenfalls DIN 47 637 entspricht.

Auch dieser Stopfen weist einen aus Silikonkautschuk bestehenden Stopfenkörper 101 auf, der in Übereinstimmung mit dem Stopfenkörper 1 zwischen einem konischen Endabschnitt 104 und einem am Deckel 102 anliegenden, zylindrischen Endabschnitt 106 einen zylindrischen Mittelabschnitt 105 aufweist, dessen Außendurchmesser kleiner ist als der größte Durchmesser des konischen Endabschnittes 104 und des Durchmessers des Endabschnittes 106. Der Deckel 102 übergreift den Endabschnitt 106. Ein Verbindungsring 107, der in eine Ringnut am Übergang vom Mittelabschnitt 105 zum Endabschnitt 106 eingreift sowie ein Federring 107′, der in einer Ringnut des Deckels 102 liegt und an dem sich der Verbindungsring 107 abstützt, sichern den Deckel 102 gegen ein Lösen vom Stopfenkörper 101 bei einer Zugbelastung. Wie bei dem Ausführungsbeispiel gemäß Fig. 1 ist ein radial nach außen abstehender Verbindungsflansch 102′ des Deckels 102 mit Bohrungen versehen, durch die hindurch Verbindungsschrauben in die Gewindebohrungen eingreifen können, welche für die Festlegung eines Kabelsteckers vorgesehen sind.

Der Stopfenkörper 101 ist mit einem zentralen, sacklochförmigen Hohlraum 108 versehen, der sich bis in den konischen Endabschnitt 104 hineinerstreckt. In diesen Hohlraum 108 greift ein an den Deckel 102 angeformter Hohlzylinder 102˝ ein, an dem der Endabschnitt 106 und ein Stück des sich anschließenden Mittelabschnittes 105 anliegen.

An dem kugelkalottenähnlich gekrümmten Ende des Hohlraumes 108 liegt ein metallischer Druckkörper 114 an, dessen dem Deckel 102 abgekehrten Seite eine Feldsteuerelektrode 115 bildet und daher auch eine kugelkalottenähnliche Krümmung hat. Der Druckkörper 114 ist gleichachsig zu einem metallischen Verbindungsstab 116 an dessen einem Ende festgelegt. Das andere Ende des metallischen Verbindungstabs 116 ist mit einem metallischen Federteller 117 verschraubt, der axial verschiebbar im Hohlzylinder 102˝ des Deckels 102 angeordnet ist. Sein Verschiebebereich ist zum einen durch einen am freien Ende des Hohlzylinder 102˝ vorgesehenen Sicherungsring 118 und andererseits dur, einen an den Deckel 102 angeformten zentralen Zapfen 119 begrenzt, der mit einer Gewindebohrung versehen ist, mit deren Hilfe ein Griff mit dem Deckel 102 verbunden werden kann. Eine vorgespannte Schraubendruckfeder 120 stützt sich einerseits am Federteller 117 und andererseits am Deckel 102 ab. Über diese Schraubenfeder 120 sind der Federteller 117, der Verbindungsstab 116 und die Feldsteuerelektrode 115 galvanisch mit dem Deckel 102 verbunden, der bei eingesetztem Stopfen auf Erdpotential liegt. Außerdem erzeugt die Schraubenfeder 120 eine axiale Belastung des Stopfenkörpers 101. Der konische Endabschnitt 104 wird deshalb nicht nur vom Deckel 102 her über den Mittelabschnitt 105, sondern auch über die Schraubenfeder 120 und den Druckkörper 114 in axialer Richtung belastet, wodurch sich eine optimale Anpressung der Außenmantelfläche des konischen Endabschnittes 104 an die Innenwand der Steckbuchse ergibt.

Die Belastung des Stopfenkörpers 101 über den Druckkörper 114 mit der Kraft der Schraubendruckfeder 120 führt ferner beim Lösen des Deckels 102 von dem Bauteil, mit dem er bei eingesetztem Stopfen verbunden ist, zu einer Zugbelastung des Stopfenkörpers 101, da die Kraft der Schraubenfeder 120 über den Federring 107′ und den Verbindungsring 107 auf den Endabschnitt 106 übertragen wird und die Schraubenfeder 120 andererseits über den Druckkörper 114 am Ende des Hohlraums 108 abgestützt ist. Diese Zugbelastung des Stopfenkörpers 101 hat eine Kontraktion und damit eine Reduzierung des Außendurchmessers zur Folge. Diese Reduzierung des Außendurchmessers führt dazu, daß die Außenmantelfäche des konischen Endabschnittes 104 sich zumindest auf einem Teil ihrer Länge von der Innenwand der Steckbuchse abhebt. Der Stopfenkörper 101 kann dann problemlos aus der Steckbuchse herausgezogen werden.

An das dem Deckel 102 abgewandte Ende des konischen Endabschnittes 104 schließt sich ein ebenfalls aus Silikonkautschuk bestehender Formkörper 121 an, dessen Oberfläche mit einer elektrisch leitenden Schicht versehen ist. Trotz dieser elektrisch leitenden Schicht kann der Formkörper 121 zusammen mit dem Stopfenkörper 101 hergestellt werden. Daher sind diese beiden Körper vollflächig miteinander verbunden.

Die elektrisch leitende Schicht bildet auf der am konischen Endabschnitt 104 anliegenden Seite eine Feldsteuerelektrode 122, die in ihrem zentralen Bereich eine kugelkalottenartige Krümmung hat, wobei der Krümmungsmittelpunkt mit demjenigen der vom Druckkörper 114 gebildeten Feldsteuerelektrode 115 zusammenfällt. Der Abstand zwischen diesen beiden Feldsteuerelektroden 115 und 122 ist so groß gewählt, daß auch bei höchsten auftretenden Spannungen ein Durchschlag ausgeschlossen ist.

Den zentralen Bereich der Feldsteuerelektrode begrenzt eine entgegengesetzt gekrümmte, wulstförmige Randzone 123, die von einer flanschartigen Werkstoffpartie des Formkörpers 121 gebildet wird, welche über den zylindrischen Mittelteil nach außen übersteht und mit diesem eine umlaufende Kehle 124 definiert.

An der von der Feldsteuerelektrode 122 wegweisenden, ebenen, in einer Querschnittsebene des Stopfens liegenden Stirnseite des Formkörpers 121 liegt eine metallische Kontaktplatte 125 an. Ein zentrales Loch dieser Kontaktplatte 125 wird von einem zapfenartigen Fortsatz 126 des Formkörpers 121 durchdrungen. Dieser Fortsatz 126 übergreift den Rand des Loches und hält dadurch die Kontaktplatte 125 in Anlage am Formkörper 121. Ein Hohlraum 126′ im Fortsatz 126 erleichtert zusammen mit einer konischen Form des Kopfendes des Fortsatzes 126 das Fügen.

Die beiden Feldsteuerelektroden 115 und 122 führen zu einer optimalen Konfiguration des elektrischen Feldes, das außerdem im wesentlichen auf den zwischen beiden Feldsteuerelektroden liegenden Teil des konischen Endabschnittes 104 beschränkt wird und damit ebenfalls dazu beiträgt, daß eine optimale elektrische Abdichtung erzielt wird.

## Patentansprüche

1. Stopfen zum elektrisch dichten Verschließen einer Steckbuchse (30;130) eines Mittel- oder Hochspannungsenergieversorungssystems für einen Kabelstecker, mit einem elastisch deformierbaren Stopfenkörper (1;101) aus einem elektrisch isolierenden Material, der zwischen dem sich gegen sein eines Ende hin konisch verjüngenden einen Endabschitt (4;104) und dem mit einem metallischen Deckel (2;102) verbundenen anderen Endabschnitt einen Mittelabschnitt (5;105) aufweist, dessen Außendurchmesser kleiner ist als der größte Außendurchmesser des konischen Endabschnittes (4;104) und der mit einem zentralen, sacklochartig ausgebildeten Hohlraum (8;108) versehen ist, welcher sich von dem gegen den Deckel (2;102) weisenden Ende bis in den konischen Endabschnitt (4;104) hinein erstreckt, dadurch gekennzeichnet, daß an dem verjüngten Ende des konischen Endabschnittes (4;104) ein eine elektrisch leitende Oberfläche aufweisender Formkörper (10;121,125) vorgesehen ist, mittels dessen vom Stopfenkörper (1;101) wegweisender Stirnfläche die Kontakthülse (31) der Steckbuchse (30;130) kontaktierbar ist und deren gegen den Stopfenkörper (1;101) weisende Fläche als Feldsteuerelektrode (11;122) ausgebildet ist.

2. Stopfen nach Anspruch 1, dadurch gekennzeichnet, daß der Formkörper ein konzentrisch zum Stopfenkörper (1) angeordneter, einstückig ausgebildeter Ringkörper (10) ist, der mittels eines seine zentrale Öffnung durchgreifenden und deren Rand hintergreifenden Fortsatzes (12) des Stopfenkörpers (1) mit diesem verbunden ist.

3. Stopfen nach Anspruch 2, dadurch gekennzeichnet, daß der metallische Ringkörper (10) auf der die Feldsteuerelektrode (11) bildenden Seite die Form eines Ringwulstes hat und daß an diese Form die anliegende Stirnfläche des konischen Endabschnittes (4) des Stopfenkörpers (1) angepaßt ist.

4. Stopfen nach Anspruch 1, dadurch gekennzeichnet, daß die die Feldsteuerelektrode (122) bildende Fläche einen zentralen Bereich in der Art einer Kugelkalotte aufweist, den eine entgegesetzt gekrümmte Randzone (123) umgibt.

5. Stopfen nach Anspruch 4, dadurch gekennzeichnet, daß der Formkörper aus einem die Feldsteuerelektrode (122) bildenden Teil (121) sowie einer Metallplatte (125) besteht und daß der erstgenannte Teil (121) aus einem halbleitenden Material oder einem mit einer leitenden Schicht auf seiner Oberfläche versehenen Isoliermaterial besteht.

6. Stopfen nach Anspruch 5, dadurch gekennzeichnet, daß der die Feldsteuerelektrode (122) bildende Teil (121) aus Silikonkautschuk besteht.

7. Stopfen nach Anspruch 5 oder 6, dadurch gekennzeichnet, daß die Randzone (123) durch eine flanschartig über den zylindrischen Zentralteil überstehende Materialpartie gebildet ist.

8. Stopfen nach einem der Ansprüche 4 bis 7, dadurch gekennzeichnet, daß die metallische Platte (125) mit wenigstens einem Loch versehen und mit dem die Feldsteuerelektrode (122) bildenden Teil (121) mittels eines das Loch durchgreifenden und dessen Rand hintergreifenden Fortsatzes (126) des die Feldsteuerelektrode (122) bildenden Teils (121) verbunden ist.

9. Stopfen nach einem der Ansprüche 1 bis 8, dadurch gekennzeichnet, daß
a) an der im konischen Endabschnitt (104) liegenden Endfläche des Hohlraums (108) ein elektrisch leitender Druckkörper (114) anliegt, welcher auf der der Endfläche des konischen Endabschnittes (104) zugekehrten Seite eine kugelkalottenartige Feldsteuerelektrode (115) bildet,
b) der Druckkörper (114) am einen Ende eines stabförmigen Kraftübertragungsgliedes (116) angeordnet ist, das im Bereich seines anderen Endes einen Federteller (117) trägt,
c) eine vorgespannte Druckfeder (120) einerseits am Federteller (117) und andererseits am Deckel (102) abgestützt ist sowie den Druckkörper (114) galvanisch mit dem bei eingesetztem Stopfen auf Erdpotential liegenden Deckel (102) verbindet,
d) an das im Durchmesser kleinere Ende des konischen Endabschnittes (104) sich ein Kontaktkörper (121,125) anschließt, der an die Kontakthülse der Steckbuchse kontaktbildend anlegbar ist und mit der dem Druckkörper (114) zugewandten Seite eine Feldsteuerelektrode (122) bildet, und
e) die Isolierfähigkeit des zwischen den beiden Feldsteuerelektroden (115,122) liegende Materials des Stopfenkörpers (101) größer ist als die maximal auftretende Spannung zwischen den beiden Feldsteuerelektroden (115,122) erfordert.

10. Stopfen nach Anspruch 9, dadurch gekennzeichnet, daß die die Feldsteuerelektrode (115) bildende Fläche des Druckkörpers (114) und der zentrale Bereich der vom Formkörper gebildeten Elektrode (122) den gleichen Krümmungsmittelpunkt haben.

## Claims

1. Plug for the electrically leakproof closure of a tip jack (30; 130) of a medium- or high-tension energy supply system for a cable connector, with a resiliently deformable plug body (1; 101) of an electrically insulating material which comprises, between an end portion (4; 104) which is tapered conically towards one of its ends and the other end portion which is connected to a metal cover (2; 102), a central portion (5; 105) the outside diameter of which is smaller than the largest outside diameter of the conical end portion (4; 104), the plug body having a central cavity (8; 108) designed as a blind hole, which extends from the end pointing towards the cover (2; 102) into the conical end portion (4; 104), characterized in that, on the narrow end of the conical end portion (4; 104), there is a shaped body (10; 121, 125) which has an electrically-conductive surface and of which the face facing away from the plug body (1; 101) can contact the contact bush (31) of the tip jack (30; 130) and the face pointing towards the plug body (1; 101) is formed as a field control electrode (11; 122).

2. Plug according to Claim 1, characterized in that the shaped body is a unitary, annular body (10) concentric with the plug body (1) and connected thereto by means of a projection (12) of the plug body (1) extending through its central opening and engaged behind the edge thereof.

3. Plug according to Claim 2, characterized in that the metallic, annular body (10) has the shape of a torus on the side forming the field control electrode (11), and in that this shape fits the adjacent face of the conical end portion (4) of the plug body (1).

4. Plug according to Claim 1, characterized in that the surface forming the field control electrode (122) comprises a spherical-cap-like central region surrounded by an edge region (123) with opposite curvature.

5. Plug according to Claim 4, characterized in that the shaped body consists of an element (121) forming the field control electrode (122) as well as a metal plate (125), and in that the former element (121) is composed of a semiconducting material or of an insulating material provided with a conductive layer on its surface.

6. Plug according to Claim 5, characterized in that the element (121) which forms the field control electrode (122) is composed of silicone rubber.

7. Plug according to Claim 5 or Claim 6, characterized in that the edge region (123) is formed by a flange-like portion of material projecting beyond the cylindrical central portion.

8. Plug according to any one of Claims 4 to 7, characterized in that the metal plate (125) is provided with at least one hole and is connected to the element (121) forming the field control electrode (122) by means of a projection (126) of the element (121) forming the field control electrode (122) extending through the hole and engaged behind the edge thereof.

9. Plug according to any one of Claims 1 to 8, characterized in that
a) adjacent the end surface of the cavity (108) which is disposed in the conical end portion (104) is an electrically conductive thrust body (114) which forms a spherical-cap-like field control electrode (115) on the side facing the end face of the conical end portion (104);
b) the thrust body (114) is disposed on one end of a rod-shaped force-transmission member (116) which carries a spring plate (117) in the region of its other end;
c) a prestressed compression spring (120) bears against the spring plate (117) on one side and the cover (102) on the other side and connects the thrust body (114) electrically to the cover (102) which is at earth potential when the plug is inserted;
d) a contact body (121, 125) connected to the smaller-diameter end of the conical end portion (104) can be placed against the contact bush of the tip jack forming a contact and forms a field control electrode (122) with the side facing the thrust body (114); and
e) the insulation capacity of the material of the plug body (101) disposed between the two field control electrodes (115, 122) is greater than is required by the maximum voltage arising between the two field control electrodes (115, 122).

10. Plug according to Claim 9, characterized in that the surface of the thrust body (114) forming the field control electrode (115) and the central region of the electrode (122) formed by the shaped body have the same centre of curvature.

## Revendications

1. Bouchon d'obturation électriquement isolante d'une fiche femelle (30 ; 130) d'un système d'alimentation en énergie moyenne ou haute tension, destinée à une fiche mâle de câble, comprenant un corps de bouchon (1 ; 101) déformable élastiquement, en matériau électriquement isolant, qui présente une partie centrale (5 ; 105) qui est située entre l'une (4 ; 104) des parties d'extrémité qui se rétrécit en cône vers l'une de ses extrémités et l'autre partie d'extrémité reliée à un couvercle métallique (2 ; 102), partie centrale dont le diamètre extérieur est plus petit que le diamètre extérieur maximal de la partie conique d'extrémité (4 104) et qui comporte une cavité centrale (8 ; 108) en forme de trou borgne qui va de l'extrémité tournée vers le couvercle (2 ; 102) jusque dans la partie conique d'extrémité (4 ; 104), caractérisé en ce qu'un corps profilé (10 ; 121, 125) présentant une surface électriquement conductrice, à l'aide de la surface extrême duquel qui est tournée à l'opposé du corps (1 ; 101) du bouchon la douille de contact (31) de la fiche femelle (30 ; 130) peut être mise en contact et dont la surface tournée vers le corps (1 ; 101) du bouchon est conformée en électrode (11 ; 122) de commande de champ, est prévu à l'extrémité rétrécie de la partie conique d'extrémité (4 ; 104).

2. Bouchon selon la revendication 1, caractérisé en ce que le corps profilé est un corps annulaire monobloc (10) disposé concentriquement au corps (1) du bouchon et qui est relié au corps (1) du bouchon par un appendice (12) de ce dernier qui passe dans son ouverture centrale et qui s'accroche derrière son bord.

3. Bouchon selon la revendication 2, caractérisé en ce que le corps annulaire métallique (10) a la forme d'un bourrelet annulaire sur le côté formant l'électrode de commande de champ (11) et en ce que la surface frontale d'appui de la partie conique d'extrémité (4) du corps (1) du bouchon est adaptée à cette forme.

4. Bouchon selon la revendication 1, caractérisé en ce que la surface formant l'électrode de commande de champ (122) comprend une partie centrale du genre d'une calotte sphérique qu'entoure une zone de bord (123) recourbée en sens opposé.

5. Bouchon selon la revendication 4, caractérisé en ce que le corps profilé se compose d'une pièce (121) formant l'électrode de commande de champ (122) ainsi que d'une plaque métallique (125) et en ce que la première pièce mentionnée (121) est en matériau semi-conducteur ou en matériau isolant comportant une couche conductrice à la surface.

6. Bouchon selon la revendication 5, caractérisé en ce que la pièce (121) formant l'électrode de commande de champ (122) est en caoutchouc au silicone.

7. Bouchon selon la revendication 5 ou 6, caractérisé en ce que la zone de bord (123) est formée d'une partie de matière en forme de rebord qui déborde de la partie centrale cylindrique.

8. Bouchon selon l'une des revendications 4 à 7, caractérisé en ce que la plaque métallique (125) comporte au moins un trou et est reliée à la pièce (121) formant l'électrode de commande de champ (122) au moyen d'un appendice (126) de la pièce (121) formant l'électrode de commande de champ (122) qui passe dans le trou et s'accroche derrière son bord.

9. Bouchon selon l'une des revendications 1 à 8, caractérisé en ce que
a) un corps de poussée (114) électriquement conducteur et en appui contre la surface d'extrémité de la cavité (108) qui est située dans la partie conique d'extrémité (104) forme sur le côté tourné vers la surface d'extrémité de la partie conique d'extrémité (104) une électrode de commande de champ (115) en forme de calotte sphérique,
b) le corps de poussée (114) est disposé à une extrémité d'un organe de transmission de force (116) en forme de tige qui supporte une cuvette de ressort (117) dans la zone de son autre extrémité,
c) un ressort de compression (120) sous précontrainte prend appui d'une part contre la cuvette de ressort (117) et d'autre part contre le couvercle (102) et relie le corps de poussée (114) par couplage voltaïque au couvercle (102) qui est au potentiel de la terre lorsque le bouchon est mis en place,
d) un corps de contact (121, 125) qui se raccorde à l'extrémité de petit diamètre de la partie conique d'extrémité (104) peut être placé contre la douille de contact de la fiche femelle en formant un contact et forme une électrode de commande de champ (122) par le côté tourné vers le corps de poussée (114) et
e) la capacité d'isolation de la matière du corps (101) du bouchon qui est située entre les deux électrodes de commande de champ (115, 122) est plus grande que celle qu'exige la tension maximale apparaissant entre les deux électrodes de commande de champ (115, 122).

10. Bouchon selon la revendication 9, caractérisé en ce que la surface du corps de poussée (114) qui forme l'électrode de commande de champ (115) et la partie centrale de l'électrode (122) formée par le corps profilé ont le même centre de courbure.
